# EUROPEAN PATENT APPLICATION

(11) **EP 1 506 812 A1**
(43) Date of publication of application: **16.02.2005**
(21) Application number: 03703086.3
(22) Date of filing: 30.01.2003
(51) Int. Cl.: B01J 29/06, C10G 11/02, C10G 11/05, C10G 11/18

(54) **CATALYST FOR FLUID CATALYTIC CRACKING OF HEAVY HYDROCARBON OIL AND METHOD OF FLUID CATALYTIC CRACKING**

(30) Priority: 31.01.2002 JP 2002023643
(71) Applicant: Petroleum Energy Center, Tokyo 105-0001 (JP); COSMO OIL CO., LTD, Minato-ku, Tokyo 105-8528 (JP)
(72) Inventor: SHIBUYA, Tadashi, c/o Cosmo Oil Co., Ltd., Satte-shi, Saitama 340-0193 (JP); NAITO, Junko, c/o Cosmo Oil Co., Ltd., Satte-shi, Saitama 340-0193 (JP); SEKINE, Nobuki, c/o Cosmo Oil Co., Ltd., Satte-shi, Saitama 340-0193 (JP)
(74) Representative: Winckels, Johannes Hubertus F.
(86) International application number: PCT/JP2003/000910
(87) International publication number: WO 2003/064036

(57) **Abstract**

A catalyst for fluidized catalytic cracking of heavy hydrocarbon oils, which comprises a fluoride salt of a divalent or trivalent metal, wherein the fluoride salt of a divalent or trivalent metal is a compound showing an XRD pattern of a fluoride salt of a divalent or trivalent metal.

## Description

### Technical Field

The present invention relates to a catalyst for fluidized catalytic cracking (hereinafter sometimes referred to as "FCC") of a heavy hydrocarbon oil and a method of FCC of the oil with the catalyst. More particularly, the invention relates to a highly durable FCC catalyst which not only deactivates catalyst poison metals contained in the oil, e.g., nickel and vanadium, reduced the amount of hydrogen or coke yielded, has excellent cracking activity and bottom oil-treating ability, and can yield a gasoline and an LCO fraction in high yields without lowering the octane number, but also can retain these performances on a high level over a long period of time, and relates to an FCC method using the catalyst.

### Background Art

Recently, in the catalytic cracking of hydrocarbon oils, there is a desire to upgrade a less expensive feedstock hydrocarbon oil of lower quality, and there is an increasingly growing tendency for feedstock hydrocarbon oils to become heavier.

Heavy feedstock hydrocarbon oils contain a large amount of metals such as nickel, vanadium and the like, and the metals almost wholly deposit on the catalyst.

In particular, it is known that when vanadium deposits and accumulates on the catalyst, it destroys the crystal structure of the crystalline aluminosilicate zeolite which is an active ingredient of the catalyst and hence a considerable decrease in catalytic activity is brought out and the amount of hydrogen and coke yielded is increased.

On the other hand, it is known that nickel causes catalytic dehydrogenation upon deposition and accumulation on the catalyst surface and hence increases the amount of hydrogen and coke yielded and, as a result, nickel causes problems that the regeneration tower temperature is elevated and so forth.

When a large amount of a heavy bottom oil (e.g., Atmospheric residue or Vacuum residue) is used as a feedstock hydrocarbon oil, not only the influences of the metals become greater but also the sulfur compounds contained in the bottom oil cause a problem that the amount of SOx in the flue gas from a catalyst regeneration tower increases and also a product oil fraction, in particular a gasoline, has an increased sulfur concentration.

Furthermore, increase of the treated amount of bottom oils leads to an increase in catalyst makeup amount and causes problems of an increase in catalyst cost and an increase in the amount of waste catalysts.

Heretofore, in order to deactivate poison metals such as vanadium or the like to be deposited on a catalyst, various techniques in which a basic compound or the like is incorporated into the catalyst as a metal deactivator and thereby improve the metal resistance of the catalyst have been proposed.

Examples include a technique in which a water-soluble compound such as an alkaline earth metal or a rare earth metal is incorporated into an inorganic oxide matrix together with a crystalline aluminosilicate zeolite, a technique in which an alkaline earth metal or the like is ion-exchanged with a crystalline aluminosilicate zeolite, and a technique in which a water-insoluble oxide (e.g., dolomite, sepiolite, an anion clay, a rare earth oxide, or the like) is incorporated into an inorganic oxide matrix (JP-A-62-57652, JP-A-63-182031, JP-A-3-293039, JP-A-6-136369, etc. ) .

Although the compounds of alkaline earth metals or rare earth metals have the effect of deactivating poison metals, they have no cracking ability when used alone. Consequently, they are used after having been incorporated as a metal deactivator into an inorganic oxide matrix together with a crystalline aluminosilicate having a cracking ability, as described above.

However, simple incorporation of a water-soluble alkaline earth metal or rare earth metal into a crystalline aluminosilicate zeolite or the like through ion exchange not only afford no sufficient metal deactivation performance but also considerable reduction of the octane number (RON) of the gasoline product obtained through catalytic cracking reactions.

Moreover, when a water-insoluble oxide of an alkaline earth metal or a rare earth metal is dispersed as a metal deactivator in an inorganic oxide matrix at catalyst preparation, the pH of the catalyst slurry fluctuates considerably due to the basic nature of the compound, so that it is difficult to produced the catalyst and also the metal deactivation performance is sometimes not attained owing to its reaction with an acid.

Furthermore, with regard to nickel which accumulates on the catalyst surface, since the metal deactivators described above often exhibit no deactivating effect thereon, a technique of feeding a specific antimony compound (organoantimony, etc.) to a feedstock hydrocarbon oil to thereby deactivate the nickel deposited on the catalyst surface has been proposed (JP-A-63-63688, JP-A-1-213399, etc.). However, in the method, the antimony compound sometimes accumulates as a metallic antimony deposit (low-melting compound having a melting point of 500 to 700°C) on the slide valve and the like in an FCC apparatus.

### Disclosure of the Invention

In view of the existing situation described above, an object of the present invention is to provide an FCC catalyst of a highly durable type (having a life at least twice longer than the life of standard catalysts) into which a metal deactivator can be incorporated without lowering the catalytic activity and which not only efficiently deactivates catalyst poison metals contained in feedstock heavy hydrocarbon oils, reduces the amount of hydrogen or coke yielded, has excellent cracking activity and bottom oil-treating ability, and can yield a gasoline and an LCO fraction in high yields without lowering the octane number, but also can retain these performances on a high level over a long period of time.

As a result of intensive studies for achieving the above object, the present inventors have found that when a specific fluoride salt selected from crystalline metal fluoride salts comprising a bivalent metal or a trivalent metal is used as a metal deactivator, then (a) catalyst poison metals contained in a feedstock oil, such as nickel, vanadium and the like, can be efficiently deactivated, (b) a catalyst can be easily prepared regardless of the kind of the inorganic oxide matrix as a binder and the catalyst can be used as an FCC catalyst of either the one-body type or the additive type, and (c) a gasoline and an LCO fraction can be obtained in high yields without lowering the octane number while selectivity to hydrogen and coke is maintained at a low level and also these performances can be maintained on a high level over a long period of time. Accordingly, the present invention has been accomplished.

Namely, the invention has the following constitution.
(1) A catalyst for fluidized catalytic cracking of a heavy hydrocarbon oil, which comprises a fluoride salt of a divalent or trivalent metal, wherein the fluoride salt of a divalent or trivalent metal is a compound showing an XRD pattern of a fluoride salt of a divalent or trivalent metal.
(2) The catalyst according to the above (1), wherein the fluoride salt of a divalent or trivalent metal is dispersed in an inorganic oxide matrix.
(3) The catalyst according to the above (1), wherein the fluoride salt of a divalent or trivalent metal is dispersed in an inorganic oxide matrix together with a crystalline aluminosilicate zeolite.
(4) The catalyst according to any one of the above (1) to (3), wherein in the fluoride salt of a divalent or trivalent metal, the bivalent metal is at least one selected from the group consisting of Mg²⁺, Ca²⁺, Sr²⁺ and Mn²⁺, and the trivalent metal is at least one selected from the group consisting of La³⁺, Ce³⁺, Mn³⁺ and Y³⁺.
(5) A method of fluidized catalytic cracking of a heavy hydrocarbon oil, which comprises:
   (1) using a catalyst (Standard Catalyst A) obtained by homogeneously dispersing a crystalline aluminosilicate zeolite in an inorganic oxide matrix and at least one of the catalyst (Catalyst B) according to claim 1, the catalyst (Catalyst C) according to claim 2, and the catalyst (Catalyst D) according to claim 3 in combination,
   (2) using Catalyst D and at least one of Catalyst B and Catalyst C in combination, or
   (3) using Catalyst D alone.

### Brief Description of the Drawings

Fig. 1 is a drawing illustrating an XRD pattern for an one-body type FCC catalyst containing 8% by weight of MgF₂.
Fig. 2 is a drawing illustrating an XRD pattern for an one-body type FCC catalyst containing 8% by weight of CaF₂.
Fig. 3 is a drawing illustrating an XRD pattern for an one-body type FCC catalyst containing 8% by weight of SrF₂.
Fig. 4 is a drawing illustrating an XRD pattern for an one-body type FCC catalyst containing 8% by weight of LaF₃.

### Best Mode for Carrying Out the Invention

Catalyst B of the present invention described in the above 1 has no cracking activity when used alone and is an FCC catalyst of the so-called additive type, which is physically mixed and used with an FCC catalyst such as the above Standard Catalyst A or the like having a cracking activity.

Catalyst C described in the above 2 is one in which the active ingredient of Catalyst B has been dispersed in an inorganic oxide matrix to enhance the mechanical strength. Catalyst C also has no cracking activity when used alone, and like Catalyst B, is an FCC catalyst of the so-called additive type, which is physically mixed and used with an FCC catalyst such as Standard Catalyst A or the like.

Catalyst D described in the above 3 is one in which the active ingredient of Catalyst B has been dispersed in an inorganic oxide matrix together with a crystalline aluminosilicate zeolite having a cracking activity. Catalyst D has a cracking activity even when used alone, and can be used as an FCC catalyst of the so-called one-body type.

Catalyst B of the invention is a catalyst for fluidized catalytic cracking of a heavy hydrocarbon oil containing a fluoride salt of a divalent or trivalent metal, wherein the fluoride salt of a divalent or trivalent metal is a compound showing an XRD pattern of a fluoride salt of a divalent or trivalent metal.

Any bivalent and trivalent metals can be used as the bivalent and trivalent metals in the fluoride salts of divalent or trivalent metals. However, the bivalent metal is preferably at least one selected from the group consisting of Be²⁺, Mg²⁺, Mn²⁺, Ca²⁺, Sr²⁺, Sn²⁺, Zn²⁺ and lanthanoid (Sm²⁺, Eu²⁺, Tm²⁺ and Yb²⁺) and is more preferably at least one selected from the group consisting of Mg²⁺, Ca²⁺, Sr²⁺ and Mn²⁺.

The trivalent metal is preferably at least one selected from the group consisting of Al³⁺, Fe³⁺, Cr³⁺, Co³⁺, Mn³⁺, Ti³⁺, Ga³⁺, Sb³⁺, Y³⁺, and lanthanoid (La³⁺, Ce³⁺, Pr³⁺, Nd³⁺, Pm³⁺, Sm³⁺, Eu³⁺, Dy³⁺, Ho³⁺, Er³⁺, Tm³⁺, Gd³⁺, Tb³⁺, Yb³⁺ and Lu³⁺) and Bi³⁺ and is more preferably at least one selected from the group consisting of Mn³⁺, La³⁺, Ce³⁺ and Y³⁺.

In the above fluoride salt of a divalent or trivalent metal, the above each metal may be used singly or in a free combination of two or more.

Namely, the fluoride salt of a divalent or trivalent metal may be a compound having only one metal described above, or may be a composite compound having two or more of the metals in combination. In this case, the metals may be mixed in any proportion. Moreover, two or more different fluoride salts of divalent or trivalent metals can be used in combination and the fluorides may be mixed in any proportion.

When the above fluoride salt of a divalent or trivalent metal is used as Catalyst B, suitable is a particulate form having an average particle size equal to that of Standard Catalyst A or Catalyst C or D to be used in combination therewith, i.e., from 50 to 90 µm, a bulk density of 0.3 to 1.2 g/ml, and an oil absorption of 0.1 cc/g or more.

On the other hand, when the fluoride is mixed with an inorganic oxide matrix, a crystalline aluminosilicate zeolite, etc. and used as a component of Catalyst C or D, suitable is a particulate form having an average particle size of 0.0001 to 60 µm, preferably 0.001 to 10 µm, and more preferably 0.1 to 5 µm.

The fluoride salts having a particle size of 60 µm or less is preferable as an FCC catalyst from the standpoints of bulk density, catalyst strength and the like because such a particle size is not equal to the average particle size of Catalyst C or D finally obtained. The case of 0.0001 µm or more is preferable because production is easy and an advantageous effect can be expected.

In Catalysts B, C and D, the fluoride salt of a divalent or trivalent metal is preferably magnesium fluoride, calcium fluoride, strontium fluoride, manganese fluoride, cerium fluoride, or lanthanum fluoride wherein the divalent or trivalent metal is Mg²⁺, Ca²⁺, Sr²⁺, Mn²⁺, Mn³⁺, La³⁺, Ce³⁺ or Y³⁺ not only in view of the catalyst poison metal-deactivating ability but also in view of the abrasion strength of the catalysts.

Particularly, in view of the performance, when a silica binder is used, strontium fluoride is preferable because it exhibits the most excellent metal-deactivating ability. In view of the cost, calcium fluoride is most preferable because it is produced in large amounts as a slag remover in the iron industry and hence is available at a low price.

Synthetic products can be obtained, for example, as follows.

The fluoride salt of a divalent or trivalent metal is obtained as a crystalline fluoride salt slurry by adding an aqueous solution of a water-soluble metal salt to an aqueous solution of hydrofluoric acid. Alternatively, it can be also obtained by adding an aqueous solution of hydrofluoric acid to a metal carbonate salt, followed by evaporation to dryness.

When two or more metals are used in combination, aqueous solutions of water-soluble salts of two or more metals are mixed together beforehand and the mixture is treated in the same manner as above to thereby obtain a slurry.

The water-soluble salts described above may be either inorganic salts or organic salts. As the counter ions in the salts, Cl⁻, Br⁻, I⁻, NO₃⁻, CO₃²⁻, SO₄²⁻, PO₄³⁻, ClO₄⁻, BO₃²⁻, CH₃COO⁻, oxalic acid, salicylic acid and the like can be used. Inexpensive Cl⁻, NO₃⁻, SO₄²⁻ and CO₃²⁻ are preferable.

There is a possibility that acid ions come into the gel during slurry aging, depending on the kind of such counter ions. Therefore, NO₃⁻ salts are the most preferable because the counter ion is apt to vaporize during a burning treatment.

After the crystal aging, the crystalline fluoride salt slurry can be subjected, without any treatment, to drying and particle size regulation so as to form Catalyst B, or can be used, without any treatment, as a component of Catalyst C or D. However, it is preferable to use the slurry after it is washed with ammonia water or an aqueous ammonium salt solution and with water to remove metallic and other impurities.

When the slurry is used as a component of Catalyst C or D, it may be subjected to spray drying or to drying and subsequent milling or the like so as to have a smaller particle size than the FCC catalyst particles. However, from the standpoint of reducing the time period necessary for preparing Catalyst C or D, it is preferable to regulate the particle size beforehand to the size described above and use the slurry.

As natural fluoride salts of divalent or trivalent metals, mineral ores can be employed.

The mineral ores include sellaite, belonesite, fluorite, frankthixonite, fluocerite, tysonite and the like.

These natural products may be used singly, or two or more may be suitably selected therefrom and used as a mixture of these in an appropriate proportion.

The natural products are preferably used after pulverization. They may be directly pulverized with a mill or they are primarily crushed with a water jet or the like and then secondarily pulverized with a wet mill, or are primarily crushed with a hammer mill or the like and then secondarily pulverized with a dry mill, whereby they are regulated so as to have the average particle size described above.

Catalysts B and C, which are of the additive type, desirably have the same physical properties as Standard Catalyst A used in combination therewith or as Catalyst D, which is of the one-body type, used in combination therewith. When the catalysts differ from each other in catalyst strength, particle size or bulk density, there are cases where the catalysts do not evenly mix with each other and are unable to exhibit sufficient catalytic performance.

The physical properties of Catalysts A to D cannot be unconditionally determined because they vary depending on the kind of the FCC apparatus and operating conditions therefor. However, for the purpose of obtaining satisfactory flowability in an FCC apparatus, the catalysts generally preferably have an average particle size of 50 to 90 µm, a bulk density of 0.3 to 1.2 g/ml, and an oil absorption of 0.1 cc/g or more, as described above.

Catalyst C of the present invention is obtainable by dispersing the above fluoride salt of a bivalent metal or trivalent metal in an inorganic oxide matrix, and has no cracking activity. Therefore, it is a catalyst of the additive type which is added to and used with an FCC catalyst having a cracking activity, such as Standard Catalyst A, Catalyst D, etc.

In Catalyst C, the content of the fluoride salt of a divalent or trivalent metal is preferably from 1 to 90% by weight, and more preferably from 30 to 70% by weight, on a dry basis.

The content thereof of 1% by weight or more is preferable because the catalyst poison metal-deactivating ability and SOx-adsorbing ability are high. Also, the content of 90% by weight or less is preferable because the effects are substantially easily obtained and also the amount of the inorganic oxide as the matrix is relatively not small and the particle-bonding strength attributable to the inorganic oxide is maintained.

As the inorganic oxide to be used as the matrix in Catalyst C, known inorganic oxides used in ordinary cracking catalysts, such as silica, silica-alumina, alumina, silica-magnesia, alumina-magnesia, phosphorus-alumina, silica-zirconia, silica-magnesia-alumina and the like, can be employed. A clay such as kaolin, halloysite, montmorillonite or the like may be mixed with the inorganic oxides.

As Catalyst C, especially preferable is a catalyst comprising a combination of alumina as the inorganic oxide matrix and at least one of magnesium fluoride, calcium fluoride, strontium fluoride, lanthanum fluoride, cerium fluoride and yttrium fluoride as the fluoride salt of a divalent or trivalent metal, because it exhibits a high catalyst poison metal-deactivating ability.

Catalyst C can be produced by adding the fluoride salt of a divalent or trivalent metal to the inorganic oxide to be used as the matrix, followed by evenly dispersing the salt, spray-drying the resulting mixture slurry in the usual manner, washing the resulting particles if necessary, and drying them again or drying/burning them.

At that time, when the fluoride salts of divalent or trivalent metals of some kinds, due to the basic nature, are evenly mix with the inorganic oxide as the matrix or other catalyst ingredients optionally incorporated, it is preferable to reduce the basic nature of the fluoride salts by coating with phosphoric acid, coating with alumina or the like.

Catalyst D of the present invention is obtainable by dispersing the above fluoride salt of a divalent or trivalent metal and a crystalline aluminosilicate zeolite in an inorganic oxide matrix. The catalyst has the catalyst poison metal-deactivating effect attributable to the fluoride salt and also has a cracking activity attributable to the crystalline aluminosilicate zeolite, and hence Catalyst D is a catalyst of the one-body type which can be used alone as an FCC catalyst.

In Catalyst D, the content of the fluoride salt of a divalent or trivalent metal in the inorganic oxide matrix is suitably from 0.01 to 20% by weight, preferably from 0.1 to 15% by weight, and more preferably from 0.5 to 10% by weight, on a dry basis.

The content thereof of 0.01% by weight or more is preferable because the metal-deactivating effect and SOx trapping are sufficient. The content of 20% by weight or less is preferable because the relative content of the crystalline aluminosilicate zeolite or the amount of the inorganic oxide as the matrix does not decrease and the cracking activity, the selectivity to gasoline are maintained, and it becomes possible to catalytically crack a feedstock oil in a desired manner as well as the desired catalyst strength is obtained.

The content of the crystalline aluminosilicate zeolite in Catalyst D is from 10 to 50% by weight, and preferably from 20 to 40% by weight, on a dry basis.

The amount thereof of 10% by weight or more is preferable because the cracking activity and the selectivity to gasoline are not reduced and it becomes possible to catalytically crack a feedstock oil in a desired manner. Also, the content of 50% by weight or less is preferable because the content of the fluoride salt of a divalent or trivalent metal or the amount of the inorganic oxide matrix does not decrease, the desired catalyst poison metal-deactivating effect is obtained and the desired catalyst strength is obtained.

As the inorganic oxide to be used as the matrix in Catalyst D, the same inorganic oxides as those used in Catalyst C described above can be used. Also, clays such as those for use in Catalyst C described above may be incorporated into the inorganic oxide.

As the crystalline aluminosilicate zeolite, zeolites X, zeolites Y, zeolites β, mordenite, zeolites ZSM, natural zeolites and the like can be used. Similar to the ordinary FCC catalysts, the zeolites can be used in a form ion-exchanged with a cation selected from hydrogen, ammonium and a polyvalent metal.

Zeolites Y are especially preferable, and zeolite USY, which has an excellent hydrothermal stability, is more preferable.

The most preferable zeolite is a heat-shock crystalline aluminosilicate zeolite (hereinafter referred to as "HS zeolite") which is obtained by burning a stabilized zeolite Y having an SiO₂/Al₂O₃ molar ratio of 5 to 15, a unit lattice size of 24.50 angstrom to less than 24.70 angstrom, and an alkali metal content (in terms of oxide) of 0.02% by weight to less than 1% by weight at from 600 to 1,200°C for from 5 to 300 minutes under an air or nitrogen atmosphere so as to result in a decrease in the crystallinity of the stabilized zeolite Y of 20% or less, the resulting zeolite having the SiO₂/Al₂O₃ molar ratio in the bulk of 5 to 15, a molar ratio of the aluminum present in the zeolite framework to all aluminum of 0.3 to 0.6, a unit lattice size of less than 24.45 angstrom, an alkali metal content (in terms of oxide) of 0.02% by weight to less than 1% by weight and characteristic peaks at around 50 angstrom and 180 angstrom in a pore distribution and also having an X-ray diffraction pattern which is a main pattern for zeolites Y, and the volume of the pores of at least 100 angstrom being from 10 to 40% of the total pore volume (See Japanese Patent No. 2,544,317.)

As Catalyst D, especially preferable is the case that magnesium fluoride, calcium fluoride, strontium fluoride, lanthanum fluoride, cerium fluoride or yttrium fluoride is used as the fluoride salt of a divalent or trivalent metal, because a high ability to deactivate catalyst poison metals is obtained. In particular, the case that strontium fluoride is used is most preferable because the most excellent hydrothermal stability and selectivity to hydrogen and coke are attained.

Catalyst D can be produced by adding the above zeolite and the above fluoride salt of a divalent or trivalent metal to the above inorganic oxide as the matrix, followed by even dispersion to thereby prepare a mixture slurry, and treating the slurry in the same manner as in the case of Catalyst C described above.

At that time, when the above fluoride salt of a divalent or trivalent metal may be difficult, due to its basic nature, to evenly mix with the inorganic oxide as the matrix, the crystalline aluminosilicate zeolite or other catalyst ingredients optionally incorporated, the basic nature of the metal compound can be reduced by coating with phosphoric acid, coating with alumina and the like, as in the case of Catalyst C.

The Catalysts D, B and C each has particular effects per se, but the other catalyst ingredient can be added according to necessity as described above. The ingredient to be added is not particularly limited and a pore-forming agent (silica, silica-alumina, etc.), an activity enhancer (alumina, etc.), a CO oxidation enhancer (platinum, etc.) and the like can be suitably selected.

Moreover, in the invention, a mixture compound comprising aluminum and at least one metal selected from among the Group IVa metals of the Periodic Table can be contained.

As the Group IVa metal of the Periodic Table in the mixture compound, any of the Group IVa metals of the Periodic Table can be used but Zr and Ti are mentioned as preferable examples.

The mixture compound in the invention means a compound in a state wherein at least one of the Group IVa metals and aluminum are mixed with each other at a molecular level. The mixture compound can be obtained as a co-precipitate by using, as a starting material, a mixture of an aqueous solution of a water-soluble Group IVa metal compound and an aqueous solution of an aluminum compound and subjecting it to a treatment to accelerate precipitation, such as pH control. The co-precipitate can be used for preparation of catalyst particles without further treatment or after drying or burning. Moreover, the mixture compound can be obtained by physically mixing individual metals or compounds such as oxides of the Group IVa metals and aluminum and then burning the mixture at a high temperature around individual melting points or treating it with a chemical substance capable of dissolving individual ingredients. The mixture compound may be in any of various forms such as composite oxides, composite hydroxides, composite sulfates, and composite carbonates.

In addition, a mixed hydroxide slurry can be used, which is obtained by mixing commercially available water-soluble salts of individual metals to be used as aqueous solutions and subjecting the mixture to a treatment such as pH control as described above. The mixed hydroxide slurry can be used for preparation of catalyst particles without further treatment or after drying or burning. At that time, as the water-soluble salt of each metal, nitrate salts, sulfate salts, carbonate salts, and the like can be used.

Furthermore, in the invention, it is possible to contain a compound of a divalent metal or a compound which is a compound showing an XRD pattern of a carbonate of a divalent metal.

In the above compound, it is preferable that the bivalent metal is at least one selected from the group consisting of Mn²⁺, Ca²⁺, Sr2+, Ba²⁺ and Sn²⁺ and the trivalent metal is at least one selected from the group consisting of Al³⁺ and Mn³⁺.

Standard Catalyst A, which may be used in combination with at least one of Catalysts B to D described above, is obtained by homogeneously dispersing a crystalline aluminosilicate zeolite in a matrix comprising an inorganic oxide. Any of conventional various cracking catalysts can be used.

Examples of the inorganic oxide matrix and crystalline aluminosilicate zeolite include those which are the same as in Catalysts C and D of the invention described above.

The amount of the crystalline aluminosilicate zeolite dispersed in a matrix comprising the above inorganic oxide or comprising it and a clay is about 10 to 50% by weight, preferably about 20 to 40% by weight in the conventional FCC catalysts. In the invention, however, the mixing proportion of Catalysts B, C and D should be taken into account because Catalyst B, C or D is used in combination with Standard Catalyst A.

Namely, it is suitable to regulate the amount of the crystalline aluminosilicate zeolite to at least 10% by weight, preferably from 10 to 50% by weight, and more preferably from 20 to 40% by weight, based on the total amount of Catalysts A, B, C and D.

The amount of the zeolite of 10% by weight or more is preferable because the desired cracking activity is obtained. Also, the amount of 50% by weight or less is preferable because the effect of mixing the zeolite is not saturated and hence the use thereof is economical.

For obtaining the desired mixing proportion of zeolite, it is advantageous to regulate beforehand the amount of zeolite in the FCC catalyst.

Standard Catalyst A desired above can be produced by adding the above crystalline aluminosilicate zeolite to the above inorganic oxide, followed by even dispersion, spray-drying the resulting mixture slurry in a usual manner, washing the resulting particles if necessary, and drying them again or burning them after drying.

The FCC method of the invention is conducted (1) using at least one of the additive type Catalysts B and C described above and the one-body type Catalyst D described above in combination with Standard Catalyst A, or (2) using the one-body type Catalyst D in combination with at least one of the additive type Catalysts B and C, or (3) using the one-body type Catalyst D alone.

When at least one of Catalysts B to D is used in combination with Standard Catalyst A, the proportion of these catalysts used is determined while taking account of the following.

When Standard Catalyst A is used in combination with Catalyst D, any proportion thereof may be selected according to the desired catalyst poison metal-deactivating ability and desired SOx-trapping ability.

When catalyst(s) (either or both of Catalysts A and D) are used in combination with catalyst(s) (either or both of Catalysts B and C), it is suitable that (either or both of Catalysts A and D)/(either or both of Catalysts B and C) is from 99.9/0.1 to 50/50, preferably from 99.5/0.5 to 80/20, more preferably from 99/1 to 90/10, in terms of weight ratio.

When either or both of the additive type Catalysts B and C account for not more than a half of the total catalyst amount, the cracking activity and selectivity to gasoline are not reduced and it becomes possible to catalytically crack a feedstock oil in a desired manner, so that the case is preferable.

In the FCC method of the invention, Catalysts A to D described above may be used as independent particulate catalysts in the proportion described above or used as particles of a catalyst mixture prepared beforehand in the proportion described above, and a heavy hydrocarbon oil as a feedstock oil is brought into contact with the catalyst particles under FCC conditions.

Examples of the heavy hydrocarbon oil include Vacuum gas oil, Atmospheric residue, Vacuum residue, a blend of these and the like.

The FCC catalyst of the invention is effective even when a heavy hydrocarbon oil having small contents of nickel or vanadium compounds or of sulfur compounds is used as a feedstock oil. However, the catalyst is extremely useful when it is used for the catalytic cracking of a low-quality heavy hydrocarbon oil containing catalyst poison metals and sulfur compounds in large amounts (e.g., a sulfur content of 0.2% by weight or more and a metal content of 50 ppm (in terms of metal amount) or more). Consequently, the FCC method of the invention can provide a remarkable effect when such a low-quality heavy hydrocarbon oil is used as a feedstock oil.

In practicing the FCC method of the invention, the amount of the metal contaminants and sulfur compounds contained in the feedstock oil is taken into account. When the amount thereof is large, the proportion of the additive type Catalyst B or C is increased at the time when Standard Catalyst A or one-body type Catalyst D is mixed with the additive type Catalyst B or C and the mixture is used. Thus, the decrease in FCC activity which may occur as the decrease of the amount of Standard Catalyst A or one-body Catalyst D can be compensated for by the increase in the amount of the crystalline aluminosilicate zeolite dispersed in Standard Catalyst A or one-body type Catalyst D.

The FCC conditions used in the invention can be FCC conditions heretofore conventionally used. Typical examples of the FCC conditions are as follows:
Reaction temperature: 460 to 540°C
WHSV: 4 to 200 hr⁻¹
Catalyst/oil ratio: 1.5 to 12

Moreover, in FCC processes, FCC catalysts which have been deactivated by coke deposition are generally regenerated by carbon burning and reused in FCC reactions. In the FCC catalyst and FCC method of the invention, Standard Catalyst A, one-body type Catalyst D, and additive type Catalysts B and C which have been spent can be regenerated with an existing regenerator under usual regeneration conditions and then can be reused.

The regeneration is conducted at a temperature of 600 to 750°C. Catalysts B to D of the invention exhibit an excellent effect in trapping the SOx which generates during this regeneration.

### Examples

The following will describe the invention more specifically with reference to Examples and Comparative Examples, but the invention is not limited to the following Examples.

### [Catalyst preparation]

### [1] Preparation of fluoride salts of bivalent or trivalent metals

### Example 1

The guaranteed-grade reagents of MgF₂ and CaF₂ manufactured by Wako Pure Chemical Industries, Ltd., the first-grade reagent of SrF₂ manufactured by Kanto Chemical Co., Inc. and the highly pure reagents of YF₃ and LaF₃ manufactured by Kanto Chemical Co., Inc. were used as fluoride salts of divalent or trivalent metals.

The samples having an average particle size of more than 10 µm were pulverized by a mill to make the average particle size 10 µm or less and then used. The samples having an average particle size of 10 µm or less were used without further treatment.

### [2] Preparation of catalyst

### Example 2

A mixed slurry was obtained by adding 64 g of HS zeolite and 86 g of kaolin clay to 400 g of silica hydrosol containing 10% by weight of SiO₂ on a dry basis.

The mixed slurry was spray-dried so as to form particles having an average particle size of 68±5 µm. After washing, the particles were again dried to obtain Standard Catalyst A.

Standard Catalyst A thus obtained was referred to as Base 1 and was used as a comparative reference mainly for on-body type Catalyst D.

With regard to Standard Catalyst A (Base 1), APS (average particle size), SA (specific surface area), ABD (apparent bulk density) and PV (pore volume) were measured.

The results are shown in Table 1.

### Example 3

A mixed slurry was obtained by adding 64 g of HS zeolite and 86 g of kaolin clay to 400 g of silica hydrosol containing 10% by weight of SiO₂ on a dry basis and further adding 16 g of a fluoride salt of a divalent or trivalent metal having a particle size of 10 µm or less prepared in Example 1.

The mixed slurry was spray-dried so as to form particles having an average particle size of 68±5 µm. After washing, the particles were again dried to obtain an one-body type Catalyst D wherein a metal compound is fixed.

The one-body type catalyst using MgF₂, CaF₂, SrF₂, LaF₃ and YF₃ were referred to as Catalysts D1, D2, D3, D4 and D5, respectively.

With regard to Catalysts D1, D2, D3, D4 and D5, APS, SA, ABD and PV were measured and the results are also shown in Table 1.

Furthermore, the metal compositions were ascertained with an ICP apparatus. As a result, the catalysts were ascertained to contain the metal fluorides in an amount of about 8% by weight on a dry basis.

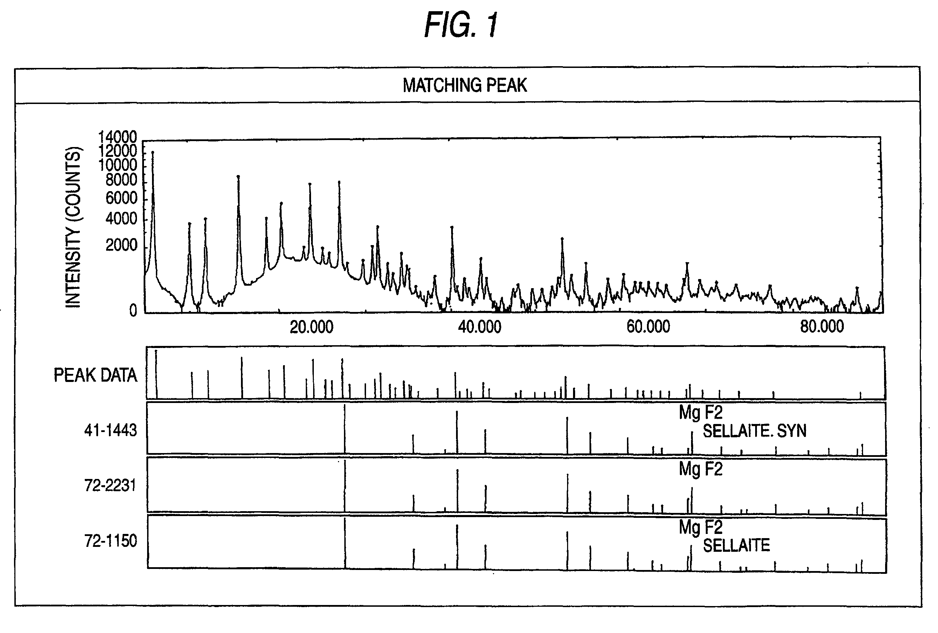

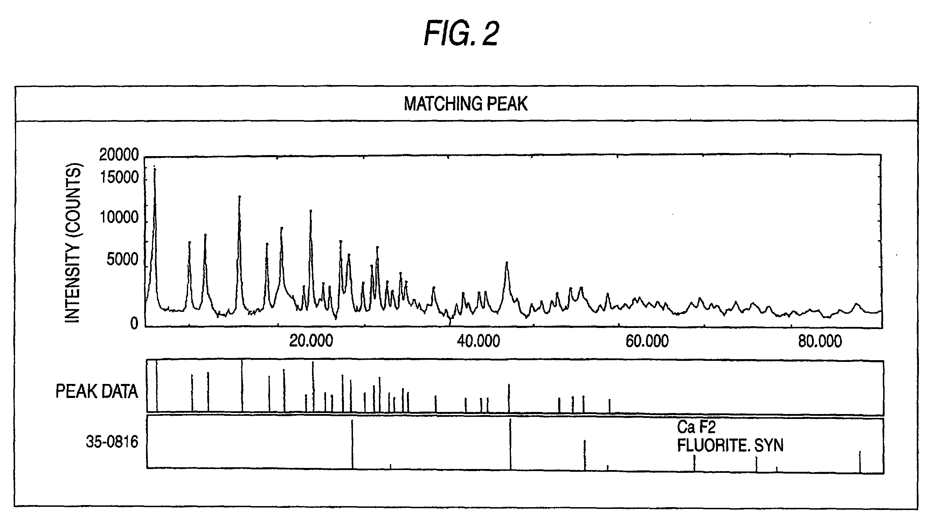

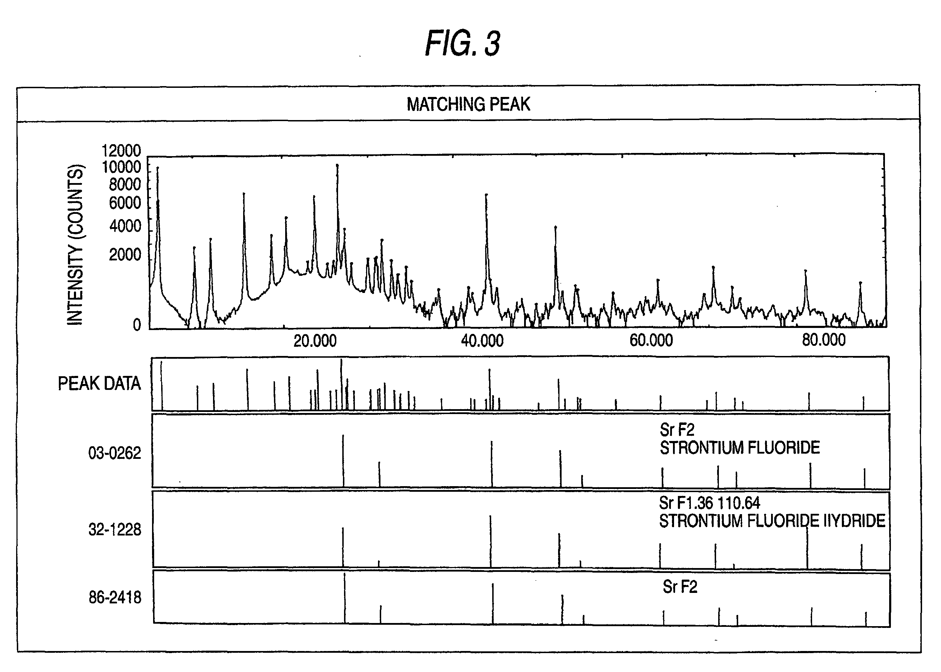

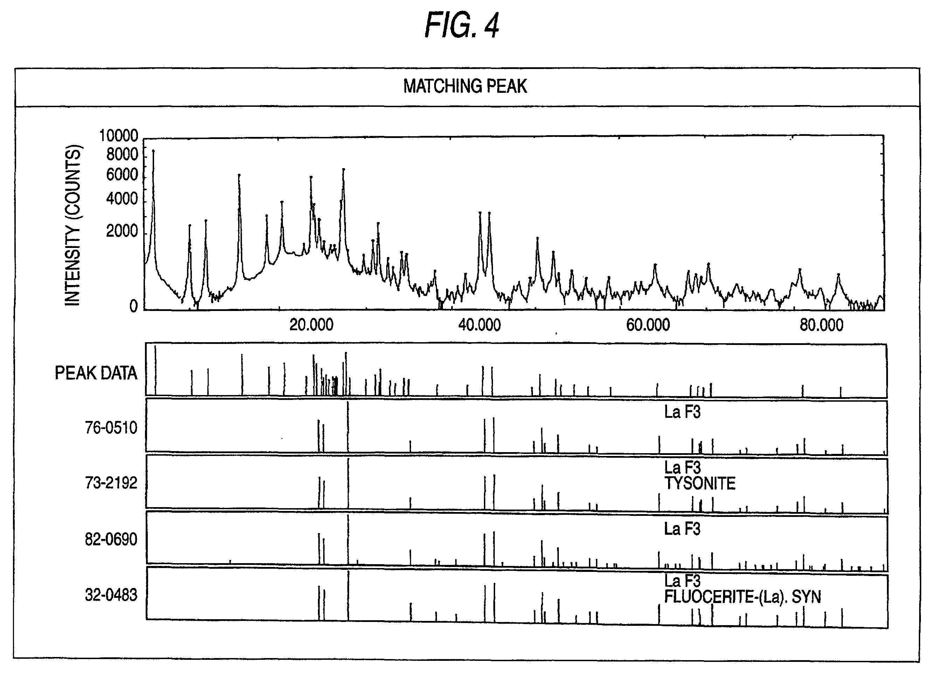

Moreover, after Catalysts D1 to D4 were dried at 100°C, an XRD apparatus was used to analyze their crystal structures. The results are shown in Figs. 1 to 4.

In Figs. 1 to 4, the results of the analysis with the XRD apparatus are shown in the upper section, peak data are shown in the middle section, and the data of the fluoride salts of divalent or trivalent metals from JCPDS-PDF (Joint Committee on Power Diffraction Standards-Power Diffraction; data bank dealing with a collection of X-ray powder diffraction data) are shown in the lower section.

As apparent from Figs. 1 to 4, it is understood that Catalysts D1, D2, D3 and D4 have the crystal structures of MgF₂, CaF₂, SrF₂ and LaF₃, respectively.

It is also ascertained that Catalyst D5 has the crystal structure of YF₃.

**Table 1:**

| Evaluation of performance of one-body type catalysts containing metal deactivator | | | | | | |
|---|---|---|---|---|---|---|
| | Reference | Example 1 | | | | |
| Catalyst name Metal deactivator name | Base 1 | D1 MgF₂ | D2 CaF₂ | D3 SrF₂ | D4 LaF₃ | D5 YF₃ |
| <Catalyst composition> | | | | | | |
| Metal | - | MgF₂ | CaF₂ | SrF₂ | LaF₃ | YF₃ |
| deactivator (% by weight) | | (8) | (8) | (8) | (8) | (8) |
| Binder (% by weight) | silica (20) | silica (20) | silica (20) | silica (20) | silica (20) | silica (20) |
| Zeolite (% by weight) | HS-USY (32) | HS-USY (32) | HS-USY (32) | HS-USY (32) | HS-USY (32) | HS-USY (32) |
| Matrix (% by weight) | kaolin (48) | kaolin (40) | kaolin (40) | kaolin (40) | kaolin (40) | kaolin (40) |
| <Catalyst properties> | | | | | | |
| APS (µm) | 68 | 70 | 68 | 69 | 69 | 68 |
| SA (m²/g) | 211.1 | 211.7 | 212.5 | 207.2 | 213.7 | 201.4 |
| ABD (ml/g) | 0.72 | 0.71 | 0.68 | 0.7 | 0.69 | 0.71 |
| PV (ml/g) | 0.105 | 0.117 | 0.128 | 0.108 | 0.119 | 0.095 |

### [3] Analytical instruments, analytical conditions, etc.

The instruments, equations for calculation and the like used in the analyses described above are as follows.
ICP (compositional analysis): "IRIS Advantage" manufactured by Thermo Jarrell Ash
APS (average particle size): "Electromagnetic Vibrating Microsifter Type M-2" manufactured by Tsutsui Rikagaku Kikai K.K.
SA (specific surface area): "BELSORP 28" (high-precision, fully automatic gas adsorber) manufactured by Bel Japan Inc.
ABD (apparent bulk density): "Bulk Density Meter" manufactured by Tokyo Kuramochi Kagaku Kikai Seisakusho (JIS Z 2504)
PV (pore volume): "MICROMERITICS AUTOPORE II 9220" manufactured by Shimadzu Corp.
XRD* instrument: "RINT 2500V" manufactured by Rigaku Denki K.K.

* XRD analysis was conducted under the following conditions using a sample prepared by drying each catalyst at 100°C for 24 hours:
Tube voltage: 50 kV
Tube current: 300 mA
Scanning mode: continuous
Scanning speed: 2°/min
Scanning step: 0.02°
Range of scanning (2θ): 5-90°
Divergence/scattering slit: 1°
Light-receiving slit: 0.3 mm

### [4] MAT activity test

### Evaluation conditions:

The catalysts obtained in Examples 3 were subjected to the following simulated equilibration treatment. Thereafter, the catalysts were evaluated for FCC activity and metal-deactivating ability using a fixed-bed micro activity test apparatus in accordance with ASTM (3907) and using hydrocarbon oils having the properties shown in Table 2 under the following test conditions.

### Conditions for simulated equilibration treatment:

Each fresh catalyst was heated from room temperature to 500°C over a period of 30 minutes and held at 500°C for 5 hours to burn it.

Thereafter, a cyclohexane solution containing nickel naphthenate and vanadium naphthenate in predetermined amounts (1,000 and 2,000 ppm by weight) was infiltrated into each catalyst.

The catalyst was dried at 100°C, subsequently again heated from room temperature to 500°C over a period of 30 minutes, and then held at 500°C for 5 hours to burn it again.

Subsequently, each catalyst in a fluidized state was heated from room temperature to 800°C over a period of 90 minutes in an air atmosphere. After the temperature had reached 800°C, the atmosphere was replaced with a 100% steam atmosphere and the catalyst was treated for 6 hours.

After this steam treatment, each catalyst was evaluated for FCC activity.

The metal-deactivating ability of each catalyst was evaluated, the amounts of nickel and vanadium supported on the catalyst being regulated to 1,000 and 2,000 ppm by weight or 3,000 and 6,000 ppm by weight, respectively.

**Table 2**

| Hydrocarbon oils tested: via desulfurization and vacuum | | |
|---|---|---|
| | Name of feedstock oil | Sample 1 |
| 1 | Density 15°C g/cm³ | 0.8819 |
| 2 | Vacuum distillation IBP | 294 |
| | 5% °C | 352 |
| | 10% °C | 367 |
| | 20% °C | 390 |
| | 30% °C | 402 |
| | 40% °C | 415 |
| | 50% °C | 424 |
| | 60% °C | 436 |
| | 70% °C | 451 |
| | 80% °C | 471 |
| | 90% °C | 506 |
| | 95% °C | 531 |
| | 97% °C | 544 |
| | End point °C | 548 |
| | Total efflux % | 98.5 |
| | Residual oil % | 1.5 |
| | Loss % | 0 |
| 3 | Pour point °C | 35 |
| 4 | Dynamic viscosity 50°C mm²/S | 18.67 |
| 5 | Nitrogen content (chemiluminescence method) % by weight | 0.02 |
| 6 | Sulfur content (X-ray method) % by weight | 0.01 |
| 7 | Refractive index 70nD | 1.47 |
| 8 | Density 70°C g/cm³ | 0.84 |
| 9 | Molecular weight (calculated from viscosity) | 402 |
| 10 | Asphaltene (UOP) % by weight | <0.01 |
| 11 | n-d-m (70°C) %CA | 12.6 |
| | %CN | 18.8 |
| | %CP | 68.4 |
| 12 | Aniline point (U-tube method) °C | 94.5 |
| 13 | Dynamic viscosity 75°C mm²/S | 8.77 |
| 14 | Dynamic viscosity 100°C mm²/S | 4.99 |
| 15 | Basic nitrogen % by weight | 0.0014 |
| 16 | Bromine number gBr₂/100 g | 1.90 |
| 17 | Hydrogen content % by weight | 13.03 |
| 18 | Residual carbon content % by weight | 0.06 |

### Test conditions: Fixed bed

Reaction temperature: 500°C
Weight proportion of Catalyst/hydrocarbon oil: 2.2, 3.0, 3.8
Test period: 75 seconds

### [5] Evaluation of catalyst performance

One-body type Catalysts D1, D2, D3, D4 and D5 containing MgF₂, CaF₂, SrF₂, LaF₃ and YF₃, respectively, were subjected to the simulated equilibration treatment and then to the MAT activity test.

The results are shown in Table 3.

The cracking activity was shown by conversion at cat/oil (ratio of catalyst weight to passing oil amount (weight) per hour) 3 and at a metal-supported amount of 1000/2000 (Ni/V (in wt. ppm)) or 3000/6000 (Ni/V (in wt. ppm)).

In Example 1 (D1 to D5), a good conversion was observed even when the metal-supported amount was high. Moreover, the yield of each ingredient was shown by selectivity at a certain conversion (60%). Example 1 (D1 to D5) showed good results in all cases.

**Table 3:**

| Evaluation of performance of one-body type catalysts containing metal deactivator | | | | | | |
|---|---|---|---|---|---|---|
| | Reference | Example 1 | | | | |
| Catalyst name Metal deactivator name | Base 1 | D1 MgF₂ | D2 CaF₂ | D3 SrF₂ | D4 LaF₃ | D5 YF₃ |
| <Conversion (% by weight)> | | | | | | |
| cat/oil | 3 | 3 | 3 | 3 | 3 | 3 |
| Metal-supported amount | | | | | | |
| Ni/V (ppm) | | | | | | |
| 1000/2000 | 66.81 | 62.34 | 62.58 | 69.68 | 68.31 | 63.24 |
| 3000/6000 | 35.73 | 50.42 | 57.23 | 64.51 | 61.83 | 62.45 |
| <Selectivity (% by weight)> | | | | | | |
| Metal-supported amount: | | | | | | |
| Ni/V=1000/2000 | | | | | | |
| (ppm) | | | | | | |
| Conversion (% by weight) | 60.00 | 60.00 | 60.00 | 60.00 | 60.00 | 60.00 |
| Yield of each ingredient (% by weight) | | | | | | |
| H₂ | 0.13 | 0.05 | 0.02 | 0.02 | 0.03 | 0.02 |
| C1-2 | 0.91 | 0.63 | 0.64 | 0.63 | 0.65 | 0.63 |
| LPG | 12.62 | 11.14 | 11.70 | 12.04 | 12.06 | 11.59 |
| Gaso | 44.94 | 47.59 | 46.90 | 46.16 | 46.54 | 47.49 |
| LCO | 27.26 | 28.55 | 28.24 | 28.40 | 28.15 | 28.57 |
| HCO⁺ | 12.62 | 11.04 | 11.60 | 11.94 | 11.76 | 10.88 |
| Coke | 1.51 | 1.01 | 0.91 | 0.80 | 0.80 | 0.81 |
| RON (gasoline octane number) | 88.14 | 87.87 | 88.18 | 87.98 | 88.07 | 88.02 |
| <Selectivity (% by weight)> | | | | | | |
| Metal-supported amount: | | | | | | |
| Ni/V=300016000(ppm) | | | | | | |
| Conversion (% by weight) | 60.00 | 60.00 | 60.00 | 60.00 | 60.00 | 60.00 |
| Yield of each ingredient (% by weight) | | | | | | |
| H₂ | - | 0.19 | 0.05 | 0.06 | 0.10 | 0.06 |
| C1-2 | - | 0.71 | 0.71 | 0.72 | 0.82 | 0.63 |
| LPG | - | 10.32 | 11.72 | 11.77 | 11.43 | 11.10 |
| Gaso | - | 46.52 | 46.90 | 47.06 | 46.73 | 47.85 |
| LCO | - | 29.33 | 28.54 | 28.14 | 26.85 | 29.22 |
| HCO⁺ | - | 11.63 | 11.21 | 11.25 | 12.93 | 10.19 |
| Coke | - | 1.31 | 0.87 | 1.00 | 1.14 | 0.97 |
| RON (gasoline octane number) | - | 88.38 | 88.05 | 87.67 | 87.82 | 87.41 |

From Table 3, it is understood that the one-body type Catalysts D1, D2, D3 and D4 of the invention exhibit catalytic activity equal to that of Standard Catalyst A although the metal-supported amount is three times as much as the amount in Standard Catalyst A, and thus the metal endurance life is greatly improved.

### Industrial Applicability

According to the present invention, there can be provided an FCC catalyst of a highly durable type (having a life at least twice longer than the life of standard catalysts) into which a metal deactivator can be incorporated without lowering the catalytic activity and which not only efficiently deactivates catalyst poison metals contained in feedstock heavy hydrocarbon oils, reduces the amount of hydrogen or coke yielded, has excellent cracking activity and bottom oil-treating ability, and can yield a gasoline and an LCO fraction in high yields without lowering the octane number, but also can retain these performances on a high level over a long period of time.

Furthermore, the FCC catalyst of the invention exhibits a binding ability with sulfur as an additional effect and can reduce SOx in flue gas from a regeneration tower at the regeneration of catalysts.

## Claims

1. A catalyst for fluidized catalytic cracking of a heavy hydrocarbon oil, which comprises a fluoride salt of a divalent or trivalent metal, wherein the fluoride salt of a divalent or trivalent metal is a compound showing an XRD pattern of a fluoride salt of a divalent or trivalent metal.

2. The catalyst according to claim 1, wherein the fluoride salt of a divalent or trivalent metal is dispersed in an inorganic oxide matrix.

3. The catalyst according to claim 1, wherein the fluoride salt of a divalent or trivalent metal is dispersed in an inorganic oxide matrix together with a crystalline aluminosilicate zeolite.

4. The catalyst according to any one of claims 1 to 3, wherein in the fluoride salt of a divalent or trivalent metal, the bivalent metal is at least one selected from the group consisting of Mg²⁺, Ca²⁺, Sr²⁺ and Mn²⁺, and the trivalent metal is at least one selected from the group consisting of La³⁺, Ce³⁺, Mn³⁺ and Y³⁺.

5. A method of fluidized catalytic cracking of a heavy hydrocarbon oil, which comprises:
(1) using a catalyst (Standard Catalyst A) obtained by homogeneously dispersing a crystalline aluminosilicate zeolite in an inorganic oxide matrix and at least one of the catalyst (Catalyst B) according to claim 1, the catalyst (Catalyst C) according to claim 2, and the catalyst (Catalyst D) according to claim 3 in combination,
(2) using Catalyst D and at least one of Catalyst B and Catalyst C in combination, or
(3) using Catalyst D alone.
